# EUROPEAN PATENT APPLICATION

(11) **EP 3 172 966 A1**
(43) Date of publication of application: **31.05.2017**
(21) Application number: 16203518.2
(22) Date of filing: 19.12.2012
(51) Int. Cl.: A01N 63/02, A01N 63/04, A01P 3/00

(54) **BIOPESTICIDE METHOD AND COMPOSITIONS**

(30) Priority: 19.12.2011 US 201161577224 P
(62) Divisional of application: 12806856.6
(71) Applicant: Novozymes Bioag A/S, 2880 Bagsvaerd (DK); Novozymes Biologicals, Inc., Salem, VA 24153 (US)
(72) Inventor: LELAND, Jarrod, E,, Blacksburg, Viginia 24060 (US)
(74) Representative: Byskov, Anne-Mette

(57) **Abstract**

The present invention is directed to the combination of biopesticide and at least one exogenous cuticle degrading enzymes (e.g., a protease, chitinase, lipase and/or cutinase) for controlling (preventing or eliminating) pests. The use of an exogenous cuticle degrading enzyme increases the efficacy of the biopesticide by increasing the speed and/or efficiency of infestation of the pest resulting in faster or more effective killing or disabling of the pest by the biopesticide. The present invention accordingly provides methods for controlling a pest comprising treating a pest habitat with a combination of pesticidally effective amounts of at least one biopesticide and at least one exogenous cuticle degrading enzyme. Pest control compositions are also described.

## Description

### BACKGROUND

Pests, such as insects, Acari (mites and ticks) and nematodes, are a major problem for the agriculture industry, limiting productivity, often significantly. Although chemical pesticides are used to control pests, excessive use of chemical pesticides leaves residues in soil, water and air and also has adverse effects on the non-target organisms and the ecological balance. In addition, pests can develop resistance to chemical pesticides, limiting their effectiveness and application. Public concern over potential health hazards of chemical pesticides and the increase in cost of chemical pesticides has also led to the exploration of more eco-friendly pest management tactics.

Biopesticides have been developed for use as an alternative, or in some cases as a supplement, to chemical pesticides. Biopesticides are living organisms (e.g., fungi and bacteria) that intervene in the life cycle of pests (by killing or disabling the pest). Examples of biopesticides include the entomopathogenic fungus *Metarhizium anisopliae,* which has been registered as a bio-insecticide for the control of insect pests in the United States and many other countries. *Metarhizium anisopliae* has been reported to infect many insect types including subterranean termites (*Reticulitermes* and *Coptotermes* spp.), corn rootworms (Diabrotica spp), black vine weevils (Otiorhynchus sulcatus), citrus root weevils (*Diaprepes abbreviatus*), Japanese beetles (*Popillia japonica*), and European chafers (*Rhizotrogus majalis*).

As natural agents, biopesticides offer more eco-friendly solutions for controlling pests and/or for for use in combination with chemical pesticide. However, one major drawback of the use of biopesticides is in their efficacy compared to chemical pesticides. There is a need in the art for biopesticides having greater efficacy for the replacement or supplementation of chemical pesticides.

### BRIEF SUMMARY OF THE INVENTION

The present invention is directed to the combination of at least one biopesticide and at least one exogenously applied cuticle degrading enzymes (e.g., a protease, chitinase, lipase and/or cutinase) for use in controlling pests. The use of an exogenously applied cuticle degrading enzyme increases the efficacy of the biopesticide. The present invention accordingly provides methods and compositions for controlling a pest comprising treating a pest habitat with a combination of pesticidally effective amounts of at least one biopesticide and at least one exogenously applied cuticle degrading enzyme. Pests which may be treated according to the present invention include, for example, insects, Acari (such as, mites and ticks) and/or nematodes (and, accordingly, the biopesticide may be used as an insecticide, Acaricide, and/or nematicide).

In one aspect, the present invention is directed to a method of controlling an insect infestation comprising treating an insect habitat with a combination of insecticidally effective amounts of at least one entomopathogenic fungus and at least one exogenously applied cuticle degrading enzyme. The present invention is also directed to an insecticide composition comprising insecticidally effective amounts of at least one entomopathogenic fungus and at least one exogenous cuticle degrading enzyme.

In another aspect, the present invention is directed to a method of controlling an Acari infestation comprising treating a pest habitat with a combination of pesticidally effective amounts of at least one acaripathogenic fungus and at least one exogenously applied cuticle degrading enzyme. The present invention is also directed to a pesticide composition comprising pesticidally effective amounts of at least one acaripathogenic fungus and at least one exogenous cuticle degrading enzyme.

The present invention is also directed to a method of controlling a nematode infestation comprising treating a nematode habitat with a combination of nematicidally effective amounts of at least one nematopathogenic fungus and at least one exogenously applied cuticle degrading enzyme. The present invention is also directed to a nematicide composition comprising nematicidally effective amounts of at least one nematopathogenic fungus and at least one exogenous cuticle degrading enzyme.

An entomopathogenic fungus may also have nematopathogenic properties, and vice versa. Alternatively, at least one entomopathogenic fungus and at least one nematopathogenic fungus may be used in combination as ingredients of pest treatment composition. In an embodiment, the present invention provides a method of controlling a pest comprising treating a pest habitat with a combination of pesticidally effective amounts of at least one entomopathogenic fungus, at least one nematopathogenic fungus and at least one exogenously applied cuticle degrading enzyme, wherein the at least one entomopathogenic fungus and the at least one nematopathogenic fungus may be the same fungus or a different fungus.

### BRIEF DESCRIPTION OF THE DRAWING

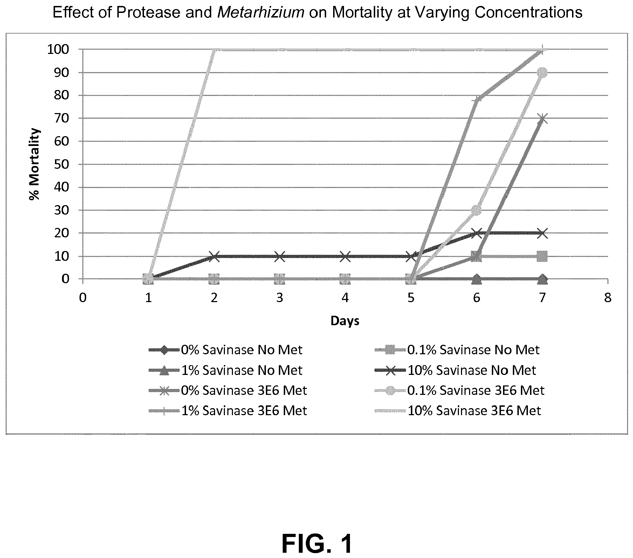

FIG. 1. is a graph that illustrates the effect of protease and *Metarhizium* on mortality at varying concentrations.

### DETAILED DESCRIPTION OF THE INVENTION

A fungal pesticide is employed in the present invention to protect a habitat from pests (such as, an insect, an Acari, and/or a nematode infestation) so as to prevent, eliminate or reduce a pest infestation in a habitat. As used herein, the term "fungal pesticide" means a fungal organism that is pathogenic to a target pest, such as, an insect, Acari or a nematode.

As used herein, a "habitat" may be any area or environment where a pest lives or is able to live, that is, any area or environment that is infested or susceptible to infestation by a pest. The habitat may be a plant, soil, or water, as well as, commercial or residential structures, storage containers (e.g., shipping containers), and commercial products (e.g., food products) and product packaging. The habitat may be agricultural fields, orchards, greenhouses, gardens, lawns, ornamental plants, or trees.

The at least one fungal pesticide and the least one cuticle degrading enzyme are applied to the habitat in the vicinity of the target pest, such as, e.g., in agriculture, on the surface of the plants to be protected (e.g., as a foliar application), as a seed coating, and/or to the soil, using conventional techniques. As used herein, "vicinity" means a location effective to result in treatment of the pest by immediate or eventual contact with the pest. The application or treating process will vary depending on the habitat.

The term "entomopathogenic" means that the fungal pesticide is pathogenic to at least one target insect. As used herein, "entomopathogenic fungus" is a fungus that can act as a parasite of an insect to kill or seriously disable the insect and is thus able to be used in the control or prevention of insect infestation by adversely affecting the viability or growth of the target insect.

The term "acaripathogenic" means that the fungal pesticide is pathogenic to at least one target Acari, such as, as mite or tick. As used herein, "acaripathogenic fungus" is a fungus that can act as a parasite of an Acari to kill or seriously disable the Acari and is thus able to be used in the control or prevention of Acari infestation by adversely affecting the viability or growth of the target nematode.

The term "nematopathogenic" means that the fungal pesticide is pathogenic to at least one target nematode. As used herein, "nematopathogenic fungus" is a fungus that can act as a parasite of a nematode to kill or seriously disable the nematode and is thus able to be used in the control or prevention of nematode infestation by adversely affecting the viability or growth of the target nematode.

The fungal pesticide may in preferred embodiments be an "entomopathogenic fungus," a "acaripathogenic fungus", a "nematopathogenic fungus" or a fungus which has one or more of these properties.

The fungal pesticide will generally function by attaching to the external body surface of the pest (e.g., insect, Arcari or nematode), such as, in the form of microscopic spores (usually asexual, mitosporic spores also called conidia). Under permissive conditions of temperature and (usually high) moisture, these spores germinate, grow as hyphae and colonize the pest's cuticle; eventually they bore through it and reach the pest's body cavity (hemocoel). The fungal cells then proliferate in the host body cavity, usually as walled hyphae or in the form of wall-less protoplasts (depending on the fungus involved). After some time, the pest is killed or disabled.

As used herein in, a "cuticle degrading enzyme" is an enzyme that is able to at least partially degrade a cuticle of a pest, such as, the epicuticle and/or the procuticle. The exogenously applied cuticle degrading enzyme can increase the efficacy of the fungal pesticide by increasing the ability of the fungal pesticide to colonize and/or or bore through the pest's cuticle to reach the pest's body cavity.

As used herein, "exogenously applied" means that the cuticle degrading enzyme is applied independently (that is, as a separate ingredient) from the fungal pesticide and any enzyme produced by fungal pesticide. Although cuticle degrading enzymes are naturally produced by a fungal pesticide (referred to herein as "endogenous" cuticle degrading enzymes) and are involved in the pesticidal activity of the fungal pesticide, the present invention is directed to the enhancement of any such endogenous pesticidal activity of the fungal pesticide through the use of an exogenously applied cuticle degrading enzyme.

The "exogenously applied" cuticle degrading enzyme is in the form of an "isolated" enzyme composition. The term "isolated" means the enzyme is in a form or environment which does not occur in nature, that is, the enzyme is at least partially removed from one or more or all of the naturally occurring constituents with which it is associated in nature. Thus, although enzymes produced endogenously by the fungal pesticide will impact efficacy, an isolated enzyme does not encompass an enzyme endogenously produced by the fungal pesticide during treatment of a pest in the processes of the present invention. An isolated enzyme may be present in the form of a purified enzyme composition or a fermentation broth sample that contains the enzyme.

The term "pesticidally effective amount" or "effective amount" (e.g., as in "insecticidally effective amount" or "nematicidally effective amount") is used herein to mean the amount of the at least one fungus and the least one cuticle degrading enzyme is sufficient to protect a habitat (e.g., plants, soil or water) from pests, such as insects, Acari and/or nematodes. Such protection can comprise a complete killing action, eradication, arresting in growth, reduction in number, prevention of infestation or any combination of these actions, collectively referred to herein as "efficacy."

An "amount effective" of the exogenously applied cuticle degrading enzyme is an amount of the enzyme effective to increase the efficacy of the fungal pesticide. The at least one fungal pesticide and the at least one exogenously applied cuticle degrading enzyme will have an efficacy better than that of a control, that is, better than the application of the fungal pesticide without the at least one cuticle exogenously applied degrading enzyme when applied under the same or comparable treatment conditions. Accordingly, the at least one exogenously applied cuticle degrading enzyme is in an amount effective to improve the efficacy of the fungal pesticide as compared to treatment with fungal pesticide alone. The cuticle degradation products released from the surface of the pest can also serve as signal for the conidia to turn on infestation pathways and/or also serve as nutrients for the early germinating spores. The exogenously applied enzyme may release products from the surface of the pest to provide this signal.

The amount effective can increase colonization and/or boring through of the fungal pesticide into the body cavity of the target pest to increase the efficacy of the fungal pesticide. The amount effective can also help degrade the peritrophic membrane that covers the target pest gut to thereby enhance penetration of the fungal pesticide into the pest gut. The amount effective can degrade the pest cuticle to release cuticle surface compounds from the pest cuticle, which serve as a signal for the conidia to turn on one or more infection pathway.

The effective amounts used for the at least one fungal pesticide and the at least one cuticle degrading enzyme will vary depending on many factors, such as, e.g., the habitat treated, whether the use is for controlling an existing pest infestation or preventing a pest infestation, the target insect, the density of the target insect population, and the method and site of application. The effective amounts of the at least one fungal pesticide and the least one cuticle degrading enzyme may be determined by routine testing as amounts effective to either kill or disable the target insect in the habitat (whether in an existing infestation or in preventing an infestation).

Fungal pesticides are well known in the art and include, for example, species of *Ascomycota, Alternaria, Beauveria, Lecanicillium, Metarhizium, Verticillium, Trichoderma, Aspergillus, Nomuraea, Paecilomyces, Isaria, Hirsutella, Fusarium, Cordyceps, Entomophthora, Zoophthora, Pandora, Entomophaga, Entomophthorales* and *Zygomycota.* Examples of species of fungal pesticides include *Trichoderma hamatum, Trichoderma hazarium, Alternaria cassiae, Fusarium lateritum, Fusarium solani, Lecanicillium lecanii, Aspergillus parasiticus, Metarhizium anisopliae,* and *Beauveria bassiana.* Any of the above organisms may be used in the invention, including any combination thereof. In specific embodiments, the fungal pesticide is a species from the genus *Metarhizium.* In more particular embodiments, the fungal pesticide is *Metarhizium anisopliae.* Particular strains of *Metarhizium anisopliae* include *Metarhizium anisopliae* strain F52. *The name of the species Metarhizium anisopliae* of the strain *Metarhizium anisopliae* F52 has recently been changed to *Metarhizium brunneum,* and thus, may be referred to in the art under both names.

Cuticle degrading enzymes are well known in the art, and include both naturally occurring (wild-type) enzymes and variant (modified by humans) enzymes. Examples of cuticle degrading enzymes include proteases, peptidases, chitinases, chitosanase, cutinases, and lipases. In an embodiment, the at least cuticle degrading enzymes is selected from the group consisting of protease, peptidase, chitinase, chitosanase, lipase, cutinase and any combination thereof. In an embodiment the at least one cuticle degrading enzyme is a protease. In an embodiment the at least one cuticle degrading enzyme is a chitinase. In an embodiment the at least one cuticle degrading enzyme is a lipase. In an embodiment the at least one cuticle degrading enzyme is a cutinase.

In a particular embodiment, the at least one cuticle degrading enzymes is a combination of at least two cuticle degrading enzymes, such as, two cuticle degrading enzyme, three cuticle degrading enzymes, four cuticle degrading enzymes, five cuticle degrading enzymes, etc.. An example of this embodiment includes a protease and chitinase. In yet another embodiment, the at least two cuticle degrading enzymes is a combination of at least two of the same type of enzyme, such as, at least two different proteases. In a particular embodiment, the at least one cuticle degrading enzymes is a combination of at least three cuticle degrading enzymes. An example is a protease, a chitinase and a lipase.

The enzyme may possess one or more cuticle degrading activities. The cuticle degrading enzyme may be obtained from any suitable source. In embodiments, the cuticle degrading enzyme may be obtained from a microorganism (such as, bacterial or fungal sources). In another embodiment, the cuticle degrading enzyme is the protease described in WO 89/06279. Commercial proteases may also be used, such as, e.g. the product SAVINASE (available from Novozymes A/S).

The cuticle degrading enzyme may also be isolated from an entomopathogenic, an acaripathogenic fungus or a nematopathogenic fungus and used as an exogenous enzyme, i.e, exogenously applied. Examples of cuticle degrading enzymes are described in Bagga, S., et al. "Reconstructing the diversification of subtilisins in the pathogenic fungus Metarhizium anisopliae." Gene 324 (2004): 159-69, Bidochka, M. J. and M. J. Melzer. "Genetic polymorphisms in three subtilisin-like protease isoforms (Pr1A, Pr1B, and Pr1C) from Metarhizium strains." Canadian Journal of Microbiology 46.12 (2000): 1138-44, Braga, G. U. L., R. Vencovsky, and C. L. Messias. "Estimates of genetic parameters related to chitinase production by the entomopathogenic fungus Metarhizium anisopliae." Genetics and Molecular Biology 21.2 (1998): 171-77, Clarkson, J. M. "Molecular biology of fungi for the control of insects." (1996): 123-35, Cole, S. C. J., A. K. Charnley, and R. M. Cooper. "Purification and partial characterization of a novel trypsin- like cysteine protease from metarhizium-anisopliae." FEMS Microbiology Letters 113.2 (1993): 189-96, Da Silva, M. V., et al. "Cuticle-induced endo/exoacting chitinase CHIT30 from Metarhizium anisopliae is encoded by an ortholog of the chi3 gene." Research in Microbiology 156.3 (2005): 382-92, Dhar & Kaur, "Production of cuticle-degrading proteases by Beauveria bassiana and their induction in different media," African Journal of Biochemistry Research, Vol. 4(3), 65-72 (2010), Fang, W. G., et al. "Expressing a fusion protein with protease and chitinase activities increases the virulence of the insect pathogen Beauveria bassiana." Journal of Invertebrate Pathology 102.2 (2009): 155-59, Freimoser, F. M., et al. "Expressed sequence tag (EST) analysis of two subspecies of Metarhizium anisopliae reveals a plethora of secreted proteins with potential activity in insect hosts." Microbiology-Sgm 149 (2003): 239-47, Gimenez-Pecci, MdIP, et al. "Characterization of mycoviruses and analyses of chitinase secretion in the biocontrol fungus Metarhizium anisopliae." Current Microbiology 45.5 (2002): 334-39, Hu, G. and R. J. S. Leger. "A phylogenomic approach to reconstructing the diversification of serine proteases in fungi." Journal of Evolutionary Biology 17.6 (2004): 1204-14, Hutwimmer, S., et al. "Algorithm-based design of synthetic growth media stimulating virulence properties of Metarhizium anisopliae conidia." Journal of Applied Microbiology 105.6 (2008): 2026-34, Joshi, L., R. S. S. Leger, and D. W. Roberts. "Isolation of a cDNA encoding a novel subtilisin-like protease (Pr1 B) from the entomopathogenic fungus, Metarhizium anisopliae using differential display-RT-PCR." Gene (Amsterdam) 197.1-2 (1997): 1-8, Kim, H. K., et al. "Gene structure and expression of the gene from Beauveria bassiana encoding bassiasin I, an insect cuticle-degrading serine protease." Biotechnology Letters 21.9 (1999): 777-83, Kim, J. S. "A novel biopesticide production: Attagelmediated precipitation of chitinase from Beauveria bassiana SFB-205 supernatant for thermotolerance." Applied Microbiology and Biotechnology 87.5 (2010): 1639-48, "Relation of aphicidal activity with cuticular degradation by beauveria bassiana SFB-205 supernatant incorporated with polyoxyethylene-(3)-isotridecyl ether." Journal of Microbiology and Biotechnology 20.3 (2010): 506-09, Kim, J. S., et al. "Influence of two FPLC fractions from Beauveria bassiana SFB-205 supernatant on the insecticidal activity against cotton aphid." Biocontrol Science and Technology 20.1 (2010): 77-81, Kim, J. S., et al. "Correlation of the aphicidal activity of Beauveria bassiana SFB-205 supernatant with enzymes." Fungal Biology 114.1 (2010): 120-28, Ko, H. J., et al. "Optimal production of protease from entomopathogenic fungus Beauveria bassiana." Agricultural Chemistry and Biotechnology 39.6 (1996): 449-54, Ko, H. J., et al. "Purification and characterization of protease from entomopathogenic fungus Beauveria bassiana." Agricultural Chemistry and Biotechnology 40.5 (1997): 388-94, Leal, S. C. M., et al. "Amplification and restriction endonuclease digestion of the Pr1 gene for the detection and characterization of Metarhizium strains." Mycological Research 101.3 (1997): 257-65, Liang et al., "The crystal structures of two cuticle-degrading proteases from nematophagous fungi and their contribution to infection against nematodes," The FASEB Journal, Vol. 24, 1391-1400, May 2010, Manalil, N. S., et al. "Comparative analysis of the Metarhizium anisopliae secretome in response to exposure to the greyback cane grub and grub cuticles." Fungal Biology 114.8 (2010): 637-45, Mohanty, S. S., K. Raghavendra, and A. P. Dash. "Induction of chymoelastase (Pr1) of Metarhizium anisopliae and its role in causing mortality to mosquito larvae." World Journal of Microbiology and Biotechnology 24.10 (2008): 2283-88, Mustafa, U. and G. Kaur. "Extracellular Enzyme Production in Metarhizium anisopliae Isolates." Folia Microbiologica 54.6 (2009): 499-504, Nahar, P., V. Ghormade, and M. V. Deshpande. "The extracellular constitutive production of chitin deacetylase in Metarhizium anisopliae: possible edge to entomopathogenic fungi in the biological control of insect pests." Journal of Invertebrate Pathology 85.2 (2004): 80-88, Ortiz-Urquiza, A., et al. "Effects of cultural conditions on fungal biomass, blastospore yields and toxicity of fungal secreted proteins in batch cultures of Metarhizium anisopliae (Ascomycota: Hypocreales)." Pest Management Science 66.7 (2010): 725-35, Paterson, I. C., et al. "Regulation of production of a trypsin-like protease by the insect pathogenic fungus metarhizium-anisopliae." FEMS Microbiology Letters 109.2-3 (1993): 323-27, "Specific induction of a cuticle-degrading protease of the insect pathogenic fungus metarhizium-anisopliae." Microbiology-Uk 140.Part 1 (1994): 185-89, "Partial characterization of specific inducers of a cuticle- degrading protease from the insect pathogenic fungus metarhizium-anisopliae." Microbiology-Uk 140.Part 11 (1994): 3153-59, Pinto, F. G., et al. "Genetic variation in the cuticle-degrading protease activity of the entomopathogen Metarhizium flavoviride." Genetics and Molecular Biology 25.2 (2002): 231-34, Qazi, S. S. and G. G. Khachatourians. "Hydrated conidia of Metarhizium anisopliae release a family of metalloproteases." Journal of Invertebrate Pathology 95.1 (2007): 48-59, Rangel, D. E. N., D. G. Alston, and D. W. Roberts. "Effects of physical and nutritional stress conditions during mycelial growth on conidial germination speed, adhesion to host cuticle, and virulence of Metarhizium anisopliae, an entomopathogenic fungus." Mycological Research 112 (2008): 1355-61, Rodriguez, C. ML and B. CE Gongora. "Transformation of Beauveria bassiana Bb9205 with pr1A, pr1J, and ste1 genes of Metarhizium anisopliae and evaluation of the pathogenicity on the coffee berry borer." REVISTA COLOMBIANA DE ENTOMOLOGIA 31.1 (2005): 51-58, Santi, L., et al. "Differential immunoproteomics enables identification of Metarhizium anisopliae proteins related to Rhipicephalus microplus infection." Research in Microbiology 160.10 (2009): 824-28, Santi, L., et al. "Metarhizium anisopliae host-pathogen interaction: differential immunoproteomics reveals proteins involved in the infection process of arthropods." Fungal Biology 114.4 (2010): 312-19, Sasaki, S. D., et al. "BmSI-7, a novel subtilisin inhibitor from Boophilus microplus, with activity toward Pr1 proteases from the fungus Metarhizium anisopliae." Experimental Parasitology 118.2 (2008): 214-20, Screen, S. E., G. Hu, and R. J. Leger. "Transformants of Metarhizium anisopliae sf. anisopliae overexpressing chitinase from Metarhizium anisopliae sf. acridum show early induction of native chitinase but are not altered in pathogenicity to Manduca sexta." Journal of Invertebrate Pathology 78.4 (2001): 260-66, Segers, R., et al. "The subtilisins of the invertebrate mycopathogens Verticillium chlamydosporium and Metarhizium anisopliae are serologically and functionally related." FEMS Microbiology Letters 126.3 (1995): 227-31, Shah, F. A., C. S. Wang, and T. M. Butt. "Nutrition influences growth and virulence of the insect-pathogenic fungus Metarhizium anisopliae." FEMS Microbiology Letters 251.2 (2005): 259-66, Small, C. L. and M. J. Bidochka. "Up-regulation of Pr1, a subtilisin-like protease, during conidiation in the insect pathogen Metarhizium anisopliae." Mycological Research 109 (2005): 307-13, Smithson, S. L., et al. "Cloning and characterization of a gene encoding a cuticle-degrading protease from the insect pathogenic fungus Metarhizium anisopliae." Gene (Amsterdam) 166.1 (1995): 161-65, St Leger, R. J. "The role of cuticle-degrading proteases in fungal pathogenesis of insects." Canadian Journal of Botany 73.SUPPL. 1 SECT. E-H (1995): S1119-S1125, St Leger, R. J., M. J. Bidochka, and D. W. Roberts. "Characterization of a novel carboxypeptidase produced by the entomopathogenic fungus Metarhizium anisopliae." Archives of biochemistry and biophysics 314.2 (1994): 392-98, "Germination triggers of Metarhizium anisopliae conidia are related to host species." Microbiology (Reading) 140.7 (1994): 1651-60, St Leger, R. J., R. M. Cooper, and A. K. Charnley. "Distribution of chymoelastases and trypsin-like enzymes in five species of entomopathogenic deuteromycetes." Archives of biochemistry and biophysics 258.1 (1987): 123-31, St Leger, R. J., L. Joshi, and D. W. Roberts. "Adaptation of proteases and carbohydrates of saprophytic, phytopathogenic and entomopathogenic fungi to the requirements of their ecological niches." Microbiology (Reading, England) 143 ( Pt 6) (1997): 1983-92, St Leger, R. J., J. O. Nelson, and S. E. Screen. "The entomopathogenic fungus Metarhizium anisopliae alters ambient pH, allowing extracellular protease production and activity." Microbiology-Uk 145 (1999): 2691-99, St Leger, R. J. and D. W. Roberts. "Engineering improved mycoinsecticides." Trends in Biotechnology 15.3 (1997): 83-85, St Leger, R. J., M. J. Bidochka, and D. W. Roberts. "Isoforms of the cuticle-degrading pr1 proteinase and production of a metalloproteinase by metarhizium-anisopliae." Archives of biochemistry and biophysics 313.1 (1994): 1-7, St Leger, R. J., R. M. Cooper, and A. K. Charnley. "Analysis of aminopeptidase and dipeptidylpeptidase iv from the entomopathogenic fungus metarhizium-anisopliae." Journal of General Microbiology 139.Part 2 (1993): 237-43, St Leger, R. J., et al. "Characterization and ultrastructural-localization of chitinases from metarhizium-anisopliae, m-flavoviride, and beauveria-bassiana during fungal invasion of host (manduca- sexta) cuticle." Applied and Environmental Microbiology 62.3 (1996): 907-12, St Leger, R. J., L. Joshi, and D. Roberts. "Ambient ph is a major determinant in the expression of cuticle-degrading enzymes and hydrophobin by metarhizium- anisopliae." Applied and Environmental Microbiology 64.2 (1998): 709-13, St Leger, R. J., R. C. Staples, and D. W. Roberts. "Entomopathogenic isolates of metarhizium-anisopliae, beauveria-bassiana, and aspergillus-flavus produce multiple extracellular chitinase isozymes." Journal of Invertebrate Pathology 61.1 (1993): 81-84, St. Leger et al., "Production of Cuticle-degrading Enzymes by the Entomopathogen Metarhizium anisopliae during Infection of Cuticles from Calliphora vomitoria and Manduca sexta," Journal of General Microbiology, 133, 1371-1382, (1987), St. Leger et al., "Cuticle-degrading Enzyme of Entomopathogenic Fungi: Regulation of Production of Chitonolytic Enzymes," General Microbiology, 132, 1509-1517 (1987), St. Leger et al., "Cuticle-Degrading Enzymes of Entomopathogenic Fungi," Synthesis in Culture on Cuticle, Journal of Invertebrate Pathology, 48, 85-95 (1986), Todorova, S. I., et al. "Heterogeneity of two Beauveria bassiana strains revealed by biochemical tests, protein profiles and bio-assays on Leptinotarsa decemlineata (Col.: Chrysomelidae) and Coleomegilla maculata lengi (Col.: Coccinellidae) larvae." Entomophaga 39.2 (1994): 159-69, Valadares, M. C. C. and J. L. Azevedo. "Production of amylases and proteases by wild-type and mutant strains of Metarhizium anisopliae var. anisopliae." Revista de Microbiologia 27.4 (1996): 237-41, Valadares-Inglis, M. C. and J. L. Azevedo. "Amylase and protease secretion in recombinant strains of Metarhizium anisopliae var. anisopliae following parasexual crosses." Brazilian Journal of Genetics 20.2 (1997): 171-75, Valadares-Inglis, M. C. and J. F. Peberdy. "Location of chitinolytic enzymes in protoplasts and whole cells of the entomopathogenic fungus Metarhizium anisopliae." Mycological Research 101.11 (1997): 1393-96, Wang, C. S., M. A. Typas, and T. M. Butt. "Detection and characterisation of pr1 virulent gene deficiencies in the insect pathogenic fungus Metarhizium anisopliae." FEMS Microbiology Letters 213.2 (2002): 251-55, Wei, Z., Y. Q. Cao, and Y. X. Xia. "Cloning of the subtilisin Pr1A gene from a strain of locust specific fungus, Metarhizium anisopliae, and functional expression of the protein in Pichia pastoris." World Journal of Microbiology and Biotechnology 24.11 (2008): 2481-88, U.S. Patent No. 5,962,765, WO/2008/063011. An exogenous cuticle degrading enzyme may be obtained from any one of the sources listed above.

The at least one fungal pesticide and the at least one cuticle degrading enzyme may be applied separately (sequentially) or simultaneously. If applied simultaneously, the at least fungal pesticide and the at least one cuticle degrading enzyme may be applied as ingredients of the same composition or different compositions.

The treatment compositions (formulations) of the present invention will vary depending on the habitat treated and the intended application. The composition may be a dry or liquid composition, such as concentrated solid or liquid formulations. The pesticidial composition may be in the form of wettable powders, dusts, granules, baits, solutions, emulsifiable concentrates, emulsions, suspensions, concentrates, sprays (aerosols and fumigants aerosols), microparticles or microcapsules, topical treatment, gels, seed coatings, baits, eartags, boluses, foggers, and many others. The composition may be dispersed in water for application, or are dust or granular formulations, which are applied without dispersion in water.

An important factor for any composition is providing a stable fungal pesticide and stable enzyme so that these ingredients retain a sufficient effective amount of activity when used. Methods for producing stabilized fungal organisms are known in the art. In embodiment, the fungal pesticide organism is present in the composition in the form of a stable spore.

Methods for stabilizing enzymes are also known in the art in both solid and liquid formulations. In an embodiment, the at least one enzyme is in powder form. In another embodiment, the at least one enzyme is in granule form.

Production of the fungal pesticide may be done in a liquid culture media or a solid culture media fermentation process. Generally, the media have high carbon and nitrogen concentrations, which are are necessary for high yields. Suitable nitrogen sources include, but are not limited to hydrolyzed casein, yeast extract, hydrolyzed soy protein, hydrolyzed cottonseed protein, and hydrolyzed corn gluten protein. Suitable carbon sources include, but are not limited to carbohydrates, including glucose, fructose, and sucrose, and glycerol.

The fermentation may be conducted using conventional fermentation processes, such as, aerobic liquid-culture techniques, shake flask cultivation, and small-scale or large-scale fermentation (including continuous, batch, fed-batch, or solid state fermentation) in laboratory or industrial fermentors, and such processes are well known in the art. The fungal organism may be used as a pesticide directly from the culture medium or subject to purification and/or further processing steps, such as, a drying process. In one embodiment, following fermentation, the fungal organism may be recovered using conventional techniques, such as by filtration or centrifugation. The fungal organism may alternatively be dried, such as by air-drying, freeze drying or spray drying, to a low moisture level, and stored at a suitable temperature (e.g., room temperature).

The pesticidal compositions are prepared according to procedures and compositions which are conventional in the relevant art, e.g., agricultural chemical art when applied in agricultural applications. The pesticidal composition preferably comprises the at least one fungal pesticide and a suitable carrier and/or at least one cuticle degrading enzyme and a suitable carrier. The carrier for the at least one fungal pesticide and the at least one cuticle degrading enzyme may be the same or different. Thus, the at least one fungal pesticide may be applied with the at least one cuticle degrading enzyme in the same composition or as ingredients of separate compositions.

Examples of carriers include aqueous carriers, nutritional carriers, and inert carriers, such as, a phytologically-acceptable inert carrier. Examples of carriers also include solid inert carriers or diluents such as diatomaceous earth, talc, clay, vermiculite, calcium carbonate, alginate gels, starch matrices or synthetic polymers. In an embodiment, the at least fungal pesticide and the at least one cuticle degrading enzyme are applied to an agricultural habitat, such as, a crop, field, plant or soil. In this aspect, the carrier is an agronomical acceptable carrier, which carriers are known in the art.

The compositions may be formulated if desired with conventional additives, such as, polymers, sticking agents or adherents, adjuvants, emulsifying agents, surfactants, foams, humectants, or wetting agents, antioxidants, colorants, UV protectants, thickners, fillers, antifreeze agents, solvents, nutritive additives, fertilizers, chemical pesticides and biopesticides (insecticides (including other bioinsecticides), fungicides and/or herbicides), which exhibit low toxicity to the subject fungal pesticide compositions of the present invention.

Exemplary polymers include polyvinyl acetate, polyvinyl alcohols with different degrees of hydrolysis, polyvinylpyrrolidones, polyacrylates, acrylate-, polyol- or polyester-based paint system binders which are soluble or dispersible in water, moreover copolymers of two or more monomers such as acrylic acid, methacrylic acid, itaconic acid, maleic acid, fumaric acid, maleic anhydride, vinylpyrrolidone, ethylenically unsaturated monomers such as ethylene, butadiene, isoprene, chloroprene, styrene, divinylbenzene, ot-methylstyrene or p-methylstyrene, further vinyl halides such as vinyl chloride and vinylidene chloride, additionally vinyl esters such as vinyl acetate, vinyl propionate or vinyl stearate, moreover vinyl methyl ketone or esters of acrylic acid or methacrylic acid with monohydric alcohols or polyols such as methyl acrylate, methyl methacrylate, ethyl acrylate, ethylene methacrylate, lauryl acrylate, lauryl methacrylate, decyl acrylate, N,N-dimethylamino-ethyl methacrylate, 2-hydroxyethyl methacrylate, 2-hydroxypropyl methacrylate or glycidyl methacrylate, furthermore diethyl esters or monoesters of unsaturated dicarboxylic acids, furthermore (meth)acrylamido-N-methylol methyl ether, amides or nitriles such as acrylamide, methacrylamide, N-methylol(meth)acrylamide, acrylonitrile, methacrylonitrile, and also N-substituted maleiraides and ethers such as vinyl butyl ether, vinyl isobutyl ether or vinyl phenyl ether.

Examples of surfactants are non-ionic and anionic emulsifiers, such as, polyoxyethylene fatty acid esters, polyoxyethylene fatty alcohol ethers, alkylaryl polyglycol ethers, fatty amine ethoxylates, alkylsulphonates, alkyl sulphates, alkylarylsulphonates, aryl sulphates and silicone surfactants.

Examples of colorants are soluble or sparingly soluble color pigments such as, for example, titanium dioxide, color black or zinc oxide.

Examples of antioxidants are sterically hindered phenols and alkyl-substituted hydroxyanisoles and hydroxytoluenes.

Examples of thickeners are organic polymers such as partially or fully neutralized polyacrylic acids, polyvinylpyrrolidone homo- or copolymers, polyethylene glycols, ethylene oxide/propylene oxide copolymers, polyvinyl alcohols and non-ionically or ionically modified celluloses, thixotropic xanthan-based thickeners, and moreover inorganic disperse thickeners such as precipitated or pyrogenic silicas, kaolins, bentonites, aluminum/silicon mixed oxides, and silicates.

Examples of antifreeze agents are urea, glycerol or propylene glycol.

Examples of fillers are ground minerals, calcium carbonate, ground quartz and aluminum/silicon mixed oxides or mixed hydroxides.

One or more other insecticides, acaricides, and/or nematicides, may be applied, either simultaneously or applied sequentially, with the biopesticide compositions of the present invention. In addition, it may be beneficial in some embodiments to apply one or more fungicides and/or herbicides, either simultaneously or applied sequentially, with the biopesticide compositions of the present invention.

Examples of additional insecticides that can be employed beneficially include: antibiotic insecticides such as allosamidin and thuringiensin; macrocyclic lactone insecticides such as spinosad, spinetoram, and other spinosyns including the 21-butenyl spinosyns and their derivatives; avermectin insecticides such as abamectin, doramectin, emamectin, eprinomectin, ivermectin and selamectin; milbemycin insecticides such as lepimectin, milbemectin, milbemycin oxime and moxidectin; arsenical insecticides such as calcium arsenate, copper acetoarsenite, copper arsenate, lead arsenate, potassium arsenite and sodium arsenite; other biological insecticides, plant incorporated protectant insecticides such as Cry1Ab, Cry1Ac, Cry1F, Cry1A.105, Cry2Ab2, Cry3A, mir Cry3A, Cry3Bb1, Cry34, Cry35, and VIP3A; botanical insecticides such as anabasine, azadirachtin, d-limonene, nicotine, pyrethrins, cinerins, cinerin I, cinerin II, jasmolin I, jasmolin II, pyrethrin I, pyrethrin II, quassia, rotenone, ryania and sabadilla; carbamate insecticides such as bendiocarb and carbaryl; benzofuranyl methylcarbamate insecticides such as benfuracarb, carbofuran, carbosulfan, decarbofuran and furathiocarb; dimethylcarbamate insecticides dimitan, dimetilan, hyquincarb and pirimicarb; oxime carbamate insecticides such as alanycarb, aldicarb, aldoxycarb, butocarboxim, butoxycarboxim, methomyl, nitrilacarb, oxamyl, tazimcarb, thiocarboxime, thiodicarb and thiofanox; phenyl methylcarbamate insecticides such as allyxycarb, aminocarb, bufencarb, butacarb, carbanolate, cloethocarb, dicresyl, dioxacarb, EMPC, ethiofencarb, fenethacarb, fenobucarb, isoprocarb, methiocarb, metolcarb, mexacarbate, promacyl, promecarb, propoxur, trimethacarb, XMC and xylylcarb; dinitrophenol insecticides such as dinex, dinoprop, dinosam and DNOC; fluorine insecticides such as barium hexafluorosilicate, cryolite, sodium fluoride, sodium hexafluorosilicate and sulfluramid; formamidine insecticides such as amitraz, chlordimeform, formetanate and formparanate; fumigant insecticides such as acrylonitrile, carbon disulfide, carbon tetrachloride, chloroform, chloropicrin, para-dichlorobenzene, 1,2-dichloropropane, ethyl formate, ethylene dibromide, ethylene dichloride, ethylene oxide, hydrogen cyanide, iodomethane, methyl bromide, methylchloroform, methylene chloride, naphthalene, phosphine, sulfuryl fluoride and tetrachloroethane; inorganic insecticides such as borax, calcium polysulfide, copper oleate, mercurous chloride, potassium thiocyanate and sodium thiocyanate; chitin synthesis inhibitors such as bistrifluoron, buprofezin, chlorfluazuron, cyromazine, diflubenzuron, flucycloxuron, flufenoxuron, hexaflumuron, lufenuron, novaluron, noviflumuron, penfluoron, teflubenzuron and triflumuron; juvenile hormone mimics such as epofenonane, fenoxycarb, hydroprene, kinoprene, methoprene, pyriproxyfen and triprene; juvenile hormones such as juvenile hormone I, juvenile hormone II and juvenile hormone III; moulting hormone agonists such as chromafenozide, halofenozide, methoxyfenozide and tebufenozide; moulting hormones such as .alpha.-ecdysone and ecdysterone; moulting inhibitors such as diofenolan; precocenes such as precocene I, precocene II and precocene III; unclassified insect growth regulators such as dicyclanil; nereistoxin analogue insecticides such as bensultap, cartap, thiocyclam and thiosultap; nicotinoid insecticides such as flonicamid; nitroguanidine insecticides such as clothianidin, dinotefuran, imidacloprid and thiamethoxam; nitromethylene insecticides such as nitenpyram and nithiazine; pyridylmethylamine insecticides such as acetamiprid, imidacloprid, nitenpyram and thiacloprid; organochlorine insecticides such as bromo-DDT, camphechlor, DDT, pp'-DDT, ethyl-DDD, HCH, gamma-HCH, lindane, methoxychlor, pentachlorophenol and TDE; cyclodiene insecticides such as aldrin, bromocyclen, chlorbicyclen, chlordane, chlordecone, dieldrin, dilor, endosulfan, endrin, HEOD, heptachlor, HHDN, isobenzan, isodrin, kelevan and mirex; organophosphate insecticides such as bromfenvinfos, chlorfenvinphos, crotoxyphos, dichlorvos, dicrotophos, dimethylvinphos, fospirate, heptenophos, methocrotophos, mevinphos, monocrotophos, naled, naftalofos, phosphamidon, propaphos, TEPP and tetrachlorvinphos; organothiophosphate insecticides such as dioxabenzofos, fosmethilan and phenthoate; aliphatic organothiophosphate insecticides such as acethion, amiton, cadusafos, chlorethoxyfos, chlormephos, demephion, demephion-O, demephion-S, demeton, demeton-O, demeton-S, demeton-methyl, demeton-O-methyl, demeton-S-methyl, demeton-S-methylsulphon, disulfoton, ethion, ethoprophos, IPSP, isothioate, malathion, methacrifos, oxydemeton-methyl, oxydeprofos, oxydisulfoton, phorate, sulfotep, terbufos and thiometon; aliphatic amide organothiophosphate insecticides such as amidithion, cyanthoate, dimethoate, ethoate-methyl, formothion, mecarbam, omethoate, prothoate, sophamide and vamidothion; oxime organothiophosphate insecticides such as chlorphoxim, phoxim and phoxim-methyl; heterocyclic organothiophosphate insecticides such as azamethiphos, coumaphos, coumithoate, dioxathion, endothion, menazon, morphothion, phosalone, pyraclofos, pyridaphenthion and quinothion; benzothiopyran organothiophosphate insecticides such as dithicrofos and thicrofos; benzotriazine organothiophosphate insecticides such as azinphosethyl and azinphos-methyl; isoindole organothiophosphate insecticides such as dialifos and phosmet; isoxazole organothiophosphate insecticides such as isoxathion and zolaprofos; pyrazolopyrimidine organothiophosphate insecticides such as chlorprazophos and pyrazophos; pyridine organothiophosphate insecticides such as chlorpyrifos and chlorpyrifos-methyl; pyrimidine organothiophosphate insecticides such as butathiofos, diazinon, etrimfos, lirimfos, pirimiphos-ethyl, pirimiphos-methyl, primidophos, pyrimitate and tebupirimfos; quinoxaline organothiophosphate insecticides such as quinalphos and quinalphos-methyl; thiadiazole organothiophosphate insecticides such as athidathion, lythidathion, methidathion and prothidathion; triazole organothiophosphate insecticides such as isazofos and triazophos; phenyl organothiophosphate insecticides such as azothoate, bromophos, bromophos-ethyl, carbophenothion, chlorthiophos, cyanophos, cythioate, dicapthon, dichlofenthion, etaphos, famphur, fenchlorphos, fenitrothion fensulfothion, fenthion, fenthion-ethyl, heterophos, jodfenphos, mesulfenfos, parathion, parathion-methyl, phenkapton, phosnichlor, profenofos, prothiofos, sulprofos, temephos, trichlormetaphos-3 and trifenofos; phosphonate insecticides such as butonate and trichlorfon; phosphonothioate insecticides such as mecarphon; phenyl ethylphosphonothioate insecticides such as fonofos and trichloronat; phenyl phenylphosphonothioate insecticides such as cyanofenphos, EPN and leptophos; phosphoramidate insecticides such as crufomate, fenamiphos, fosthietan, imicyafos, mephosfolan, phosfolan and pirimetaphos; phosphoramidothioate insecticides such as acephate, isocarbophos, isofenphos, methamidophos and propetamphos; phosphorodiamide insecticides such as dimefox, mazidox, mipafox and schradan; oxadiazine insecticides such as indoxacarb; phthalimide insecticides such as dialifos, phosmet and tetramethrin; pyrazole insecticides such as acetoprole, ethiprole, fipronil, pyrafluprole, pyriprole, tebufenpyrad, tolfenpyrad and vaniliprole; pyrethroid ester insecticides such as acrinathrin, allethrin, bioallethrin, barthrin, bifenthrin, bioethanomethrin, cyclethrin, cycloprothrin, cyfluthrin, beta-cyfluthrin, cyhalothrin, gamma-cyhalothrin, lambda-cyhalothrin, cypermethrin, alpha-cypermethrin, beta-cypermethrin, theta-cypermethrin, zeta-cypermethrin, cyphenothrin, deltamethrin, dimefluthrin, dimethrin, empenthrin, fenfluthrin, fenpirithrin, fenpropathrin, fenvalerate, esfenvalerate, flucythrinate, fluvalinate, tau-fluvalinate, furethrin, imiprothrin, metofluthrin, permethrin, biopermethrin, transpermethrin, phenothrin, prallethrin, profluthrin, pyresmethrin, resmethrin, biopermethrin, cismethrin, tefluthrin, terallethrin, tetramethrin, tralomethrin and transfluthrin; pyrethroid ether insecticides such as etofenprox, flufenprox, halfenprox, protrifenbute and silafluofen; pyrimidinamine insecticides such as flufenerim and pyrimidifen; pyrrole insecticides such as chlorfenapyr; tetronic acid insecticides such as spirodiclofen, spiromesifen and spirotetramat; thiourea insecticides such as diafenthiuron; urea insecticides such as flucofuron and sulcofuron; and unclassified insecticides such as AKD-3088, chlorantraniliprole, closantel, crotamiton, cyflumetofen, E2Y45, EXD, fenazaflor, fenazaquin, fenoxacrim, fenpyroximate, FKI-1033, flubendiamide, HGW86, hydramethylnon, IKI-2002, isoprothiolane, malonoben, metaflumizone, metoxadiazone, nifluridide, NNI-9850, NNI-0101, pymetrozine, pyridaben, pyridalyl, pyrifluquinazon, Qcide, rafoxanide, Rynaxypyr.TM., SYJ-159, triarathene and triazamate and any combinations thereof.

Examples of fungicides that can be employed include: 2-(thiocyanatomethylthio)-benzothiazole, 2-phenylphenol, 8-hydroxyquinoline sulfate, Ampelomyces, quisqualis, azaconazole, azoxystrobin, Bacillus subtilis, benalaxyl, benomyl, benthiavalicarb-isopropyl, benzylaminobenzene-sulfonate (BABS) salt, bicarbonates, biphenyl, bismerthiazol, bitertanol, blasticidin-S, borax, Bordeaux mixture, boscalid, bromuconazole, bupirimate, calcium polysulfide, captafol, captan, carbendazim, carboxin, carpropamid, carvone, chloroneb, chlorothalonil, chlozolinate, Coniothyrium minitans, copper hydroxide, copper octanoate, copper oxychloride, copper sulfate, copper sulfate (tribasic), cuprous oxide, cyazofamid, cyflufenamid, cymoxanil, cyproconazole, cyprodinil, dazomet, debacarb, diammonium ethylenebis-(dithiocarbamate), dichlofluanid, dichlorophen, diclocymet, diclomezine, dichloran, diethofencarb, difenoconazole, difenzoquat ion, diflumetorim, dimethomorph, dimoxystrobin, diniconazole, diniconazole-M, dinobuton, dinocap, diphenylamine, dithianon, dodemorph, dodemorph acetate, dodine, dodine free base, edifenphos, epoxiconazole, ethaboxam, ethoxyquin, etridiazole, famoxadone, fenamidone, fenarimol, fenbuconazole, fenfuram, fenhexamid, fenoxanil, fenpiclonil, fenpropidin, fenpropimorph, fentin, fentin acetate, fentin hydroxide, ferbam, ferimzone, fluazinam, fludioxonil, flumorph, fluopicolide, fluoroimide, fluoxastrobin, fluquinconazole, flusilazole, flusulfamide, flutolanil, flutriafol, folpet, formaldehyde, fosetyl, fosetyl-aluminium, fuberidazole, furalaxyl, furametpyr, guazatine, guazatine acetates, GY-81, hexachlorobenzene, hexaconazole, hymexazol, imazalil, imazalil sulfate, imibenconazole, iminoctadine, iminoctadine triacetate, iminoctadine tris(albesilate), ipconazole, iprobenfos, iprodione, iprovalicarb, isoprothiolane, kasugamycin, kasugamycin hydrochloride hydrate, kresoxim-methyl, mancopper, mancozeb, maneb, mepanipyrim, mepronil, mercuric chloride, mercuric oxide, mercurous chloride, metalaxyl, mefenoxam, metalaxyl-M, metam, metam-ammonium, metam-potassium, metam-sodium, metconazole, methasulfocarb, methyl iodide, methyl isothiocyanate, metiram, metominostrobin, metrafenone, mildiomycin, myclobutanil, nabam, nitrothal-isopropyl, nuarimol, octhilinone, ofurace, oleic acid (fatty acids), orysastrobin, oxadixyl, oxine-copper, oxpoconazole fumarate, oxycarboxin, pefurazoate, penconazole, pencycuron, pentachlorophenol, pentachlorophenyl laurate, penthiopyrad, phenylmercury acetate, phosphonic acid, phthalide, picoxystrobin, polyoxin B, polyoxins, polyoxorim, potassium bicarbonate, potassium hydroxyquinoline sulfate, probenazole, prochloraz, procymidone, propamocarb, propamocarb hydrochloride, propiconazole, propineb, proquinazid, prothioconazole, pyraclostrobin, pyrazophos, pyributicarb, pyrifenox, pyrimethanil, pyroquilon, quinoclamine, quinoxyfen, quintozene, Reynoutria sachalinensis extract, silthiofam, simeconazole, sodium 2-phenylphenoxide, sodium bicarbonate, sodium pentachlorophenoxide, spiroxamine, sulfur, SYP-Z071, tar oils, tebuconazole, tecnazene, tetraconazole, thiabendazole, thifluzamide, thiophanate-methyl, thiram, tiadinil, tolclofos-methyl, tolylfluanid, triadimefon, triadimenol, triazoxide, tricyclazole, tridemorph, trifloxystrobin, triflumizole, triforine, triticonazole, validamycin, vinclozolin, zineb, ziram, zoxamide, Candida oleophila, Fusarium oxysporum, Gliocladium spp., Phlebiopsis gigantean, Streptomyces griseoviridis, Trichoderma spp., (RS)-N-(3,5-dichlorophenyl)-2-(methoxymethyl)-succinimide, 1,2-dichloropropane, 1,3-dichloro-1,1,3,3-tetrafluoroacetone hydrate, 1-chloro-2,4-dinitronaphthalene, 1-chloro-2-nitropropane, 2-(2-heptadecyl-2-imidazolin-1-yl)ethanol, 2,3-dihydro-5-phenyl-1,4-dithi-ine 1,1,4,4-tetraoxide, 2-methoxyethylmercury acetate, 2-methoxyethylmercury chloride, 2-methoxyethylmercury silicate, 3-(4-chlorophenyl)-5-methylrhodanine, 4-(2-nitroprop-1-enyl)phenyl thiocyanateme: ampropylfos, anilazine, azithiram, barium polysulfide, Bayer 32394, benodanil, benquinox, bentaluron, benzamacril; benzamacril-isobutyl, benzamorf, binapacryl, bis(methylmercury) sulfate, bis(tributyltin) oxide, buthiobate, cadmium calcium copper zinc chromate sulfate, carbamorph, CECA, chlobenthiazone, chloraniformethan, chlorfenazole, chlorquinox, climbazole, copper bis(3-phenylsalicylate), copper zinc chromate, cufraneb, cupric hydrazinium sulfate, cuprobam, cyclafuramid, cypendazole, cyprofuram, decafentin, dichlone, dichlozoline, diclobutrazol, dimethirimol, dinocton, dinosulfon, dinoterbon, dipyrithione, ditalimfos, dodicin, drazoxolon, EBP, ESBP, etaconazole, etem, ethirim, fenaminosulf, fenapanil, fenitropan, fluotrimazole, furcarbanil, furconazole, fluconazole-cis, furmecyclox, furophanate, glyodine, griseofulvin, halacrinate, Hercules 3944, hexylthiofos, ICIA0858, isopamphos, isovaledione, mebenil, mecarbinzid, metazoxolon, methfuroxam, methylmercury dicyandiamide, metsulfovax, milneb, mucochloric anhydride, myclozolin, N-3,5-dichlorophenyl-succinimide, N-3-nitrophenylitaconimide, natamycin, N-ethylmercurio-4-toluenesulfonanilide, nickel bis(dimethyldithiocarbamate), OCH, phenylmercury dimethyldithiocarbamate, phenylmercury nitrate, phosdiphen, prothiocarb; prothiocarb hydrochloride, pyracarbolid, pyridinitril, pyroxychlor, pyroxyfur, quinacetol; quinacetol sulfate, quinazamid, quinconazole, rabenzazole, salicylanilide, SSF-109, sultropen, tecoram, thiadifluor, thicyofen, thiochlorfenphim, thiophanate, thioquinox, tioxymid, triamiphos, triarimol, triazbutil, trichlamide, urbacid, XRD-563, and zarilamid, and any combinations thereof.

Examples of herbicides that can be employed include: amide herbicides such as allidochlor, beflubutamid, benzadox, benzipram, bromobutide, cafenstrole, CDEA, chlorthiamid, cyprazole, dimethenamid, dimethenamid-P, diphenamid, epronaz, etnipromid, fentrazamide, flupoxam, fomesafen, halosafen, isocarbamid, isoxaben, napropamide, naptalam, pethoxamid, propyzamide, quinonamid and tebutam; anilide herbicides such as chloranocryl, cisanilide, clomeprop, cypromid, diflufenican, etobenzanid, fenasulam, flufenacet, flufenican, mefenacet, mefluidide, metamifop, monalide, naproanilide, pentanochlor, picolinafen and propanil; arylalanine herbicides such as benzoylprop, flampropand flamprop-M; chloroacetanilide herbicides such as acetochlor, alachlor, butachlor, butenachlor, delachlor, diethatyl, dimethachlor, metazachlor, metolachlor, S-metolachlor, pretilachlor, propachlor, propisochlor, prynachlor, terbuchlor, thenylchlor and xylachlor; sulfonanilide herbicides such as benzofluor, perfluidone, pyrimisulfan and profluazol; sulfonamide herbicides such as asulam, carbasulam, fenasulam and oryzalin; antibiotic herbicides such as bilanafos; benzoic acid herbicides such as chloramben, dicamba, 2,3,6-TBA and tricamba; pyrimidinyloxybenzoic acid herbicides such as bispyribac and pyriminobac; pyrimidinylthiobenzoic acid herbicides such as pyrithiobac; phthalic acid herbicides such as chlorthal; picolinic acid herbicides such as aminopyralid, clopyralid and picloram; quinolinecarboxylic acid herbicides such as quinclorac and quinmerac; arsenical herbicides such as cacodylic acid, CMA, DSMA, hexaflurate, MAA, MAMA, MSMA, potassium arsenite and sodium arsenite; benzoylcyclohexanedione herbicides such as mesotrione, sulcotrione, tefuryltrione and tembotrione; benzofuranyl alkylsulfonate herbicides such as benfuresate and ethofumesate; carbamate herbicides such as asulam, carboxazole chlorprocarb, dichlormate, fenasulam, karbutilate and terbucarb; carbanilate herbicides such as barban, BCPC, carbasulam, carbetamide, CEPC, chlorbufam, chlorpropham, CPPC, desmedipham, phenisopham, phenmedipham, phenmedipham-ethyl, propham and swep; cyclohexene oxime herbicides such as alloxydim, butroxydim, clethodim, cloproxydim, cycloxydim, profoxydim, sethoxydim, tepraloxydim and tralkoxydim; cyclopropylisoxazole herbicides such as isoxachlortole and isoxaflutole; dicarboximide herbicides such as benzfendizone, cinidon-ethyl, flumezin, flumiclorac, flumioxazin and flumipropyn; dinitroaniline herbicides such as benfluralin, butralin, dinitramine, ethalfluralin, fluchloralin, isopropalin, methalpropalin, nitralin, oryzalin, pendimethalin, prodiamine, profluralin and trifluralin; dinitrophenol herbicides such as dinofenate, dinoprop, dinosam, dinoseb, dinoterb, DNOC, etinofen and medinoterb; diphenyl ether herbicides such as ethoxyfen; nitrophenyl ether herbicides such as acifluorfen, aclonifen, bifenox, chlomethoxyfen, chlomitrofen, ethipromid, fluorodifen, fluoroglycofen, fluoronitrofen, fomesafen, furyloxyfen, halosafen, lactofen, nitrofen, nitrofluorfen and oxyfluorfen; dithiocarbamate herbicides such as dazomet and metam; halogenated aliphatic herbicides such as alorac, chloropon, dalapon, flupropanate, hexachloroacetone, iodomethane, methyl bromide, monochloroacetic acid, SMA and TCA; imidazolinone herbicides such as imazamethabenz, imazamox, imazapic, imazapyr, imazaquin and imazethapyr; inorganic herbicides such as ammonium sulfamate, borax, calcium chlorate, copper sulfate, ferrous sulfate, potassium azide, potassium cyanate, sodium azide, sodium chlorate and sulfuric acid; nitrile herbicides such as bromobonil, bromoxynil, chloroxynil, dichlobenil, iodobonil, ioxynil and pyraclonil; organophosphorus herbicides such as amiprofosmethyl, anilofos, bensulide, bilanafos, butamifos, 2,4-DEP, DMPA, EBEP, fosamine, glufosinate, glyphosate and piperophos; phenoxy herbicides such as bromofenoxim, clomeprop, 2,4-DEB, 2,4-DEP, difenopenten, disul, erbon, etnipromid, fenteracol and trifopsime; phenoxyacetic herbicides such as 4-CPA, 2,4-D, 3,4-DA, MCPA, MCPA-thioethyl and 2,4,5-T; phenoxybutyric herbicides such as 4-CPB, 2,4-DB, 3,4-DB, MCPB and 2,4,5-TB; phenoxypropionic herbicides such as cloprop, 4-CPP, dichlorprop, dichlorprop-P, 3,4-DP, fenoprop, mecopropand mecoprop-P; aryloxyphenoxypropionic herbicides such as chlorazifop, clodinafop, clofop, cyhalofop, diclofop, fenoxaprop, fenoxaprop-P, fenthiaprop, fluazifop, fluazifop-P, haloxyfop, haloxyfop-P, isoxapyrifop, metamifop, propaquizafop, quizalofop, quizalofop-P and trifop; phenylenediamine herbicides such as dinitramine and prodiamine; pyrazolyl herbicides such as benzofenap, pyrazolynate, pyrasulfotole, pyrazoxyfen, pyroxasulfone and topramezone; pyrazolylphenyl herbicides such as fluazolate and pyraflufen; pyridazine herbicides such as credazine, pyridafol and pyridate; pyridazinone herbicides such as brompyrazon, chloridazon, dimidazon, flufenpyr, metflurazon, norflurazon, oxapyrazon and pydanon; pyridine herbicides such as aminopyralid, cliodinate, clopyralid, dithiopyr, fluoroxypyr, haloxydine, picloram, picolinafen, pyriclor, thiazopyr and triclopyr; pyrimidinediamine herbicides such as iprymidam and tioclorim; quaternary ammonium herbicides such as cyperquat, diethamquat, difenzoquat, diquat, morfamquat and paraquat; thiocarbamate herbicides such as butylate, cycloate, di-allate, EPTC, esprocarb, ethiolate, isopolinate, methiobencarb, molinate, orbencarb, pebulate, prosulfocarb, pyributicarb, sulfallate, thiobencarb, tiocarbazil, tri-allate and vemolate; thiocarbonate herbicides such as dimexano, EXD and proxan; thiourea herbicides such as methiuron; triazine herbicides such as dipropetryn, triaziflam and trihydroxytriazine; chlorotriazine herbicides such as atrazine, chlorazine, cyanazine, cyprazine, eglinazine, ipazine, mesoprazine, procyazine, proglinazine, propazine, sebuthylazine, simazine, terbuthylazine and trietazine; methoxytriazine herbicides such as atraton, methometon, prometon, secbumeton, simeton and terbumeton; methylthiotriazine herbicides such as ametryn, aziprotryne, cyanatryn, desmetryn, dimethametryn, methoprotryne, prometryn, simetryn and terbutryn; triazinone herbicides such as ametridione, amibuzin, hexazinone, isomethiozin, metamitron and metribuzin; triazole herbicides such as amitrole, cafenstrole, epronaz and flupoxam; triazolone herbicides such as amicarbazone, bencarbazone, carfentrazone, flucarbazone, propoxycarbazone, sulfentrazone and thiencarbazone-methyl; triazolopyrimidine herbicides such as cloransulam, diclosulam, florasulam, flumetsulam, metosulam, penoxsulam and pyroxsulam; uracil herbicides such as butafenacil, bromacil, flupropacil, isocil, lenacil and terbacil; 3-phenyluracils; urea herbicides such as benzthiazuron, cumyluron, cycluron, dichloralurea, diflufenzopyr, isonoruron, isouron, methabenzthiazuron, monisouron and noruron; phenylurea herbicides such as anisuron, buturon, chlorbromuron, chloreturon, chlorotoluron, chloroxuron, daimuron, difenoxuron, dimefuron, diuron, fenuron, fluometuron, fluothiuron, isoproturon, linuron, methiuron, methyldymron, metobenzuron, metobromuron, metoxuron, monolinuron, monuron, neburon, parafluoron, phenobenzuron, siduron, tetrafluoron and thidiazuron; pyrimidinylsulfonylurea herbicides such as amidosulfuron, azimsulfuron, bensulfuron, chlorimuron, cyclosulfamuron, ethoxysulfuron, flazasulfuron, flucetosulfuron, flupyrsulfuron, foramsulfuron, halosulfuron, imazosulfuron, mesosulfuron, nicosulfuron, orthosulfamuron, oxasulfuron, primisulfuron, pyrazosulfuron, rimsulfuron, sulfometuron, sulfosulfuron and trifloxysulfuron; triazinylsulfonylurea herbicides such as chlorsulfuron, cinosulfuron, ethametsulfuron, iodosulfuron, metsulfuron, prosulfuron, thifensulfuron, triasulfuron, tribenuron, triflusulfuron and tritosulfuron; thiadiazolylurea herbicides such as buthiuron, ethidimuron, tebuthiuron, thiazafluoron and thidiazuron; and unclassified herbicides such as acrolein, allyl alcohol, azafenidin, benazolin, bentazone, benzobicyclon, buthidazole, calcium cyanamide, cambendichlor, chlorfenac, chlorfenprop, chlorflurazole, chlorflurenol, cinmethylin, clomazone, CPMF, cresol, ortho-dichlorobenzene, dimepiperate, endothal, fluoromidine, fluridone, fluorochloridone, flurtamone, fluthiacet, indanofan, methazole, methyl isothiocyanate, nipyraclofen, OCH, oxadiargyl, oxadiazon, oxaziclomefone, pentachlorophenol, pentoxazone, phenylmercury acetate, pinoxaden, prosulfalin, pyribenzoxim, pyriftalid, quinoclamine, rhodethanil, sulglycapin, thidiazimin, tridiphane, trimeturon, tripropindan and tritac.

A variety of pests may be targeted, including insects, Acari or nematodes. Insects and other pests which can be targeted include, but are not limited to: Lepidoptera---Heliothis spp., Helicoverpa spp., Spodoptera spp., Mythimna unipuncta, Agrotis ipsilon, Earias spp., Euxoa auxiliaris, Trichoplusia ni, Anticarsia gemmatalis, Rachiplusia nu, Plutella xylostella, Chilo spp., Scirpophaga incertulas, Sesamia inferens, Cnaphalocrocis medinalis, Ostrinia nubilalis, Cydia pomonella, Carposina niponensis, Adoxophyes orana, Archips argyrospilus, Pandemis heparana, Epinotia aporema, Eupoecilia ambiguella, Lobesia botrana, Polychrosis viteana, Pectinophora gossypiella, Pieris rapae, Phyllonorycter spp., Leucoptera malifoliella, Phyllocnisitis citrella Coleoptera--Diabrotica spp., Leptinotarsa decemlineata, Oulema oryzae, Anthonomus grandis, Lissorhoptrus oryzophilus, Agriotes spp., Melanotus communis, Popillia japonica, Cyclocephala spp., Tribolium spp. Homoptera--Aphis spp., Myzus persicae, Rhopalosiphum spp., Dysaphis plantaginea, Toxoptera spp., Macrosiphum euphorbiae, Aulacorthum solani, Sitobion avenae, Metopolophium dirhodum, Schizaphis graminum, Brachycolus noxius, Nephotettix spp., Nilaparvata lugens, Sogatella furcifera, Laodelphax striatellus, Bemisia tabaci, Trialeurodes vaporariorum, Aleurodes proletella, Aleurothrixus floccosus, Quadraspidiotus perniciosus, Unaspis yanonensis, Ceroplastes rubens, Aonidiella aurantii Hemiptera--Lygus spp., Eurygaster maura, Nezara viridula, Piezodorus guildingi, Leptocorisa varicornis, Cimex lectularius, Cimex hemipterus Thysanoptera--Frankliniella spp., Thrips spp., Scirtothrips dorsalis Isoptera--Reticulitermes flavipes, Coptotermes formosanus, Reticulitermes virginicus, Heterotermes aureus, Reticulitermes hesperus, Coptotermes frenchii, Shedorhinotermes spp., Reticulitermes santonensis, Reticulitermes grassei, Reticulitermes banyulensis, Reticulitermes speratus, Reticulitermes hageni, Reticulitermes tibialis, Zootermopsis spp., Incisitermes spp., Marginitermes spp., Macrotermes spp., Microcerotermes spp., Microtermes spp. Diptera--Liriomyza spp., Musca domestica, Aedes spp., Culex spp., Anopheles spp., Fannia spp., Stomoxys spp., Hymenoptera--Iridomyrmex humilis, Solenopsis spp., Monomorium pharaonis, Atta spp., Pogonomyrmex spp., Camponotus spp., Monomorium spp., Tapinoma sessile, Tetramorium spp., Xylocapa spp., Vespula spp., Polistes spp. Mallophaga (chewing lice) Anoplura (sucking lice)--Pthirus pubis, Pediculus spp. Orthoptera (grasshoppers, crickets)--Melanoplus spp., Locusta migratoria, Schistocerca gregaria, Gryllotalpidae (mole crickets). Blattoidea (cockroaches)--Blatta orientalis, Blattella germanica, Periplaneta americana, Supella longipalpa, Periplaneta australasiae, Periplaneta brunnea, Parcoblatta pennsylvanica, Periplaneta fuliginosa, Pycnoscelus surinamensis, Siphonaptera-Ctenophalides spp., Pulex irritans Acari--Tetranychus spp., Panonychus spp., Eotetranychus carpini, Phyllocoptruta oleivora, Aculus pelekassi, Brevipalpus phoenicis, Boophilus spp., Dermacentor variabilis, Rhipicephalus sanguineus, Amblyomma americanum, Ixodes spp., Notoedres cati, Sarcoptes scabiei, Dermatophagoides spp. Nematoda--Dirofilaria immitis, Meloidogyne spp., Heterodera spp., Hoplolaimus columbus, Belonolaimus spp., Pratylenchus spp., Rotylenchus reniformis, Criconemella ornata, Ditylenchus spp., Aphelenchoides besseyi, Hirschmanniella spp.

Examples of target pests include soil-born insects and ground- and canopy-dwelling insects. Without being limited thereto, pests which may be targeted include Acari (mites and ticks); Blatteria, Coleoptera, Diptera, Orthoptera, Thysanoptera, Hemiptera, Homoptera, Isoptera; Phthiraptera; Siphonaptera; Lepidoptera; Hymenoptera.. Target pests also include root weevils, thrips, whiteflies, mites, ticks, rootworms, wireworms, fruit flies, soil grubs, root maggots, termites, and ants, particularly corn rootworm (Diabrotica spp), black vine weevil (Otiorhynchus sulcatus), citrus root weevil (Diaprepes abbreviatus), sweet potato weevil (Cylas formicarius), sugarbeet root maggot (Tetanops myopaeformis), cabbage maggot (Delia radicum), onion maggot (Delia antigua), turnip maggot (Delia floralis), seedcorn maggot (Delia platura), carrot rust fly (Psila rosae), Japanese beetle (Popillia japonica), European chafer (Rhizotrogus majalis), subterranean termite (Reticulitermes and Coptotermes spp, emerald ash borer (Agrilus planipennis), gypsy moth (Lymantria dispar), and the pecan weevil (Curculio caryae).

### EXAMPLES

### Example 1

An experiment was done with two doses of *Metarhizium anisopliae* strain F52 (0 and 3.3 x 10E6 conidia/mL) each combined with four concentrations of a protease (the commercial protease enzyme SAVINASE available from Novozymes A/S) in amount of 0, 0.1%, 1%, and 10% w/w. Ten mealworms were exposed to each of the resulting eight treatments and monitored for mortality over 6 days.

The resulting mortality is presented in FIG. 1. As illustrated in FIG. 1, the combination of conidia at 3.3x10E6 conidia/mL with concentrations of Savinase at 0.1% or higher resulted in a shorter time to mortality in treated mealworms. Savinase alone at 1% did not result in increased mortality over untreated mealworms. Savinase alone at 10% resulted in up to 20% mortality above untreated mealworms, but still lower than mortality in mealworms treated with conidia alone at 3.3x10E6 conidia/mL.

### EXAMPLE EMBODIMENTS

1. A method for controlling a pest comprising treating a pest habitat with a biopesticide comprising a pesticidally effective amount of at least one fungal pesticide and at least one exogenously applied cuticle degrading enzyme.
2. The method of embodiment 1, wherein the at least one fungal pesticide comprises is at least one entomopathogenic fungus.
3. The method of embodiment 1, wherein the at least one fungal pesticide comprises at least one nematopathogenic fungus.
4. The method of embodiment 1, wherein the at least one fungal pesticide comprises at least one acaripathogenic fungus.
5. The method of embodiment 1, wherein the at least one fungal pesticide has one or more of the following properties: entomopathogenic activity, acaripathogenic activity, and nematopathogenic properties.
6. The method of embodiment 1, wherein the at least one fungal pesticide is selected from the group consisting of species of *Ascomycota, Alternaria, Beauveria, Lecanicillium, Metarhizium, Verticillium, Trichoderma, Aspergillus, Nomuraea, Paecilomyces, Isaria, Hirsutella, Fusarium, Cordyceps, Entomophthora, Zoophthora, Pandora, Entomophaga, Entomophthorales* and *Zygomycota.*
7. The method of embodiment 1, wherein the at least one fungal pesticide comprises *Alternaria cassiae, Fusarium lateritum, Fusarium solani, Verticillium lecanii, Aspergillus parasiticus, Metarhizium anisopliae, Beauveria bassiana* and any combination thereof, preferably *Metarhizium anisopliae.*
8. The method of any of embodiments 1-7, wherein the least one exogenously applied cuticle degrading enzyme is selected from the group consisting of protease, peptidase, chitinase, chitosanase, lipase, cutinase and any combination thereof.
9. The method of any of embodiments 1-8, wherein the treating comprises treating the habitat with a composition comprising the pesticidally effective amounts of the at least one fungal pesticide, at least one exogenously applied cuticle degrading enzyme and a carrier for the at least one fungal pesticide and the at least one exogenously applied cuticle degrading enzyme.
10. The method of any of embodiments 1-8, wherein the treating comprises treating the habitat with a composition comprising the at least one fungal pesticide and a carrier for the fungal pesticide and a composition comprising the at least one exogenously applied cuticle degrading enzyme and a carrier for the at least one exogenously applied cuticle degrading enzyme.
11. The method of any of embodiments 1-10, wherein the at least one cuticle degrading enzyme is in an amount effective to increase the boring through of fungal pesticide through the cuticle of the target pest.
12. The method of any of embodiments 1-11, wherein the habitat is a plant, soil, or water environment.
13. The method of any of embodiments 1-12, wherein the habitat is a commercial structure, residential structures, or storage container.
14. The method of any of embodiments 1-13, wherein the habitat is an agricultural field, orchard, greenhouse, garden, lawn, ornamental plant, or tree.
15. The method of any of embodiments 1-14, wherein pest is selected from the group consisting of one or more of Acari (mites and ticks); Blatteria, Coleoptera, Diptera, Orthoptera, Thysanoptera, Hemiptera, Homoptera, Isoptera; Phthiraptera; Siphonaptera; Lepidoptera; and Hymenoptera.
16. The method of any of embodiments 1-15, wherein the treating is a method of preventing an infestation of a habitat by a pest.
17. The method of any of embodiments 1-16, wherein the treating is a method of treating an existing infestation of a habitat by a pest.
18. The method of any of embodiments 1-17, wherein the treating comprises treating a pest habitat on at least two different times with the biopesticide.
19. The method of any of embodiments1-18, wherein the treating further comprises also treating the pest habitat with a fungicide and/or herbicide.
20. The method of any of embodiments 1-19, wherein biopesticide is the form of a wettable powder, dust, granule, bait, solution, emulsifiable concentrate, emulsion, suspensions, concentrate, spray, microparticle, microcapsules, topical treatment, gel, seed coating, systemic uptake, bait, eartag, bolus, or fogger.
21. A biopesticide comprising pesticidally effective amounts of at least one fungal pesticide and at least one exogenous cuticle degrading enzyme.
22. The biopesticide of embodiment 21, wherein the at least one fungal pesticide comprises at least one entomopathogenic fungus.
23. The biopesticide of embodiment 21, wherein the at least one fungal pesticide comprises at least one nematopathogenic fungus.
24. The biopesticide of embodiment 21, wherein the at least one fungal pesticide comprises at least one acaripathogenic fungus.
25. The biopesticide of embodiment 21, wherein the at least one fungal pesticide has one or more of the following properties: entomopathogenic activity, acaripathogenic activity, and nematopathogenic activity.
26. The biopesticide of embodiment 21, wherein the at least one fungal pesticide is selected from the group consisting of species of *Ascomycota, Alternaria, Beauveria, Lecanicillium, Metarhizium, Verticillium, Trichoderma, Aspergillus, Nomuraea, Paecilomyces, Isaria, Hirsutella, Fusarium, Cordyceps, Entomophthora, Zoophthora, Pandora, Entomophaga, Entomophthorales* and *Zygomycota.*
27. The biopesticide of embodiment 21, wherein the at least one fungal pesticide comprises *Alternaria cassiae, Fusarium lateritum, Fusarium solani, Verticillium lecanii, Aspergillus parasiticus, Metarhizium anisopliae, Beauveria bassiana* and any combination thereof, more preferably, and *Metarhizium anisopliae.*
28. The biopesticide of any of embodiments 21-27, wherein the least one exogenous cuticle degrading enzyme is selected from the group consisting of protease, peptidase, chitinase, chitosanase, lipase and any combination thereof.
29. The biopesticide of any of embodiments 21-28, wherein the biopesticide comprises a composition comprising the pesticidally effective amounts of the at least one fungal pesticide, at least one exogenous cuticle degrading enzyme and a carrier for the at least one fungal pesticide and the at least one exogenous cuticle degrading enzyme.
30. The biopesticide of any of embodiments 21-28, wherein the biopesticide comprises a composition comprising the at least one fungal pesticide and a carrier for the fungal pesticide and a composition comprising the at least one exogenous cuticle degrading enzyme and a carrier for the cuticle degrading enzyme.
31. The biopesticide of any of embodiments 21-30, wherein the at least one cuticle degrading enzyme is in an amount effective to increase the penetration of the fungal pesticide through the cuticle of the target pest.
32. The biopesticide of any of embodiments 21-31, wherein the biopesticide is in the form of a wettable powder, dust, granule, bait, solution, emulsifiable concentrate, emulsion, suspensions, concentrate, spray, microparticle, microcapsules, topical treatment, gel, seed coating, systemic uptake, bait, eartag, bolus, or fogger.

## Claims

1. A method for controlling a pest comprising treating a pest habitat with a biopesticide comprising a pesticidally effective amount of at least one fungal pesticide and at least one exogenously applied cuticle degrading enzyme.

2. The method of claim 1, wherein the at least one fungal pesticide comprises at least one entomopathogenic fungus.

3. The method of claim 1, wherein the at least one fungal pesticide comprises *Alternaria cassiae, Fusarium lateritum, Fusarium solani, Verticillium lecanii, Aspergillus parasiticus, Metarhizium anisopliae, Beauveria bassiana* and any combination thereof, preferably *Metarhizium anisopliae.*

4. The method of any of claims 1-3, wherein the least one exogenously applied cuticle degrading enzyme is selected from the group consisting of protease, peptidase, chitinase, chitosanase, lipase, cutinase and any combination thereof.

5. The method of any of claims 1-4, wherein the treating comprises treating the habitat with a composition comprising the pesticidally effective amounts of the at least one fungal pesticide, at least one exogenously applied cuticle degrading enzyme and a carrier for the at least one fungal pesticide and the at least one exogenously applied cuticle degrading enzyme.

6. The method of any of claims 1-5, wherein the pest is selected from the group consisting of one or more of Acari (mites and ticks); Blatteria, Coleoptera, Diptera, Orthoptera, Thysanoptera, Hemiptera, Homoptera, Isoptera; Phthiraptera; Siphonaptera; Lepidoptera; and Hymenoptera.

7. The method of any of claims 1-6, wherein the treating comprises treating a pest habitat on at least two different times with the biopesticide.

8. The method of any of claims 1-7, wherein the treating further comprises also treating the pest habitat with a fungicide and/or herbicide.

9. The method of any of claims 1-8, wherein biopesticide is in the form of a wettable powder, dust, granule, bait, solution, emulsifiable concentrate, emulsion, suspensions, concentrate, spray, microparticle, microcapsules, topical treatment, gel, seed coating, systemic uptake, bait, eartag, bolus, or fogger.

10. A biopesticide comprising pesticidally effective amounts of at least one fungal pesticide and at least one exogenous cuticle degrading enzyme.

11. The biopesticide of claim 10, wherein the at least one fungal pesticide comprises at least one entomopathogenic fungus.

12. The biopesticide of claim 10, wherein the at least one fungal pesticide comprises *Alternaria cassiae, Fusarium lateritum, Fusarium solani, Verticillium lecanii, Aspergillus parasiticus, Metarhizium anisopliae, Beauveria bassiana* and any combination thereof, more preferably, and *Metarhizium anisopliae.*

13. The biopesticide of any of claims 10-12, wherein the at least one exogenous cuticle degrading enzyme is selected from the group consisting of protease, peptidase, chitinase, chitosanase, lipase and any combination thereof.

14. The biopesticide of any of claims 10-13, wherein the at least one cuticle degrading enzyme is in an amount effective to increase the penetration of the fungal pesticide through the cuticle of the target pest.

15. The biopesticide of any of claims 10-14, wherein the biopesticide is in the form of a wettable powder, dust, granule, bait, solution, emulsifiable concentrate, emulsion, suspensions, concentrate, spray, microparticle, microcapsules, topical treatment, gel, seed coating, systemic uptake, bait, eartag, bolus, or fogger.
